# EUROPEAN PATENT SPECIFICATION

(11) **EP 3 482 990 B1**
(45) Date of publication and mention of the grant of the patent: **04.05.2022**
(21) Application number: 17824039.6
(22) Date of filing: 23.06.2017
(51) Int. Cl.: B60K 13/04, F01N 1/00, F01N 1/24, F01N 13/20

(54) **VEHICLE**
FAHRZEUG
VÉHICULE

(30) Priority: 08.07.2016 JP 2016136457; 31.05.2017 JP 2017108116
(43) Date of publication of application: 15.05.2019
(73) Proprietor: Yamaha Motor Power Products Kabushiki Kaisha, Kakegawa-shi Shizuoka 436-0084 (JP)
(72) Inventor: OBA, Yuya, Kakegawa-shi Shizuoka 436-0084 (JP); YOSHIKAWA, Makoto, Kakegawa-shi Shizuoka 436-0084 (JP); ITO, Takeshi, Kakegawa-shi Shizuoka 436-0084 (JP)
(74) Representative: Zimmermann, Tankred Klaus
(86) International application number: PCT/JP2017/023184
(87) International publication number: WO 2018/008432

(56) References cited:
- EP-A1- 2 792 524
- JP-A- H07 215 074
- JP-A- 2005 007 995
- JP-A- 2015 210 897
- JP-A- 2016 185 749
- JP-B2- 3 414 518
- US-A1- 2015 377 113

## Description

### TECHNICAL FIELD

The present invention relates to vehicles, and more specifically to a vehicle including an engine.

### BACKGROUND ART

Patent Literature 1 discloses an example of conventional technique in this field. Patent Literature 1 discloses a small vehicle in which a drive unit is mounted at a rear region of a vehicle body frame via a sub-frame. In the small vehicle, the drive unit is composed of an engine and a transmission connected to the engine via a V-belt type automatic transmission device. A muffler is mounted on the left side of the vehicle and is connected to an engine cylinder via an exhaust pipe. At a lower end portion of the muffler, a generally L-shaped exhaust gas discharge pipe is connected, and the pipe is routed through a hole formed in a sound insulation board mounted on a lower portion of the sub-frame, and is brought outside. The exhaust gas passes through the pipe and is then discharged rearward from below the muffler and the sound insulation board. The cylinder is covered with a shroud, which provides a path for a cooling wind. A muffler cover which covers the muffler is connected to the shroud. The muffler cover has its lower surface formed with an opening, and the opening is above the hole of the sound insulation board. The cooling wind is introduced from the shroud into the muffler cover, cools the muffler and thereafter is discharged below via the opening of the muffler cover and the hole of the sound insulation board.

EP 2 792 524 A1 teaches a construction machine comprising an engine accommodated in an engine room, a muffler, a bottom plate formed with an opening hole for communicating with inside of the engine room, an exhaust duct provided in the engine room, for guiding air having cooled the engine to the opening hole, to exhaust the air to the outside of the engine room.

### CITATION LIST

### PATENT LITERATURE

Patent Literature 1: JP-A 2005-7995

### SUMMARY OF INVENTION

### TECHNICAL PROBLEM

In Patent Literature 1, the pipe connected to the muffler is relatively short and is exposed to the outside from below the sound insulation board. Therefore, there is a possibility that noise from the muffler is not attenuated so much and the noise comes out of the vehicle as the exhaust gas is discharged from the muffler. Also, since the hole in the sound insulation board is located below the opening which is formed in the lower surface of the muffler cover, there is a possibility that noise such as engine vibration noise is not attenuated so much, resulting in noise leakage via the shroud and the muffler cover, out of the vehicle from the hole in the sound insulation board.

Therefore, a primary object of the present invention is to provide a vehicle capable of reducing sound leakage out of the vehicle.

### SOLUTION TO PROBLEM

According to the invention, a vehicle is provided as defined in claim 1.

In the present invention, the exhaust duct is connected to the exit end portion of the muffler cover, and extends rearward above the undercover which is provided at a lower position than the engine, whereas the exhaust duct has its rearward end portion positioned at the opening which is located at a more rearward position than the muffler in a side view. Exhaust gas from the muffler passes through the exhaust duct and the opening in the undercover, and is then discharged to the outside from below the engine room. Since the exhaust duct extends rearward so that the rearward end portion of the exhaust duct is located at a more rearward position than the muffler, noise from the muffler is attenuated inside the exhaust duct. Also, since the exhaust duct is connected to the muffler cover, a cooling wind from the muffler cover passes through the exhaust duct and is discharged from the opening, whereas noise propagating through the muffler cover such as vibration noise of the engine is attenuated inside the exhaust duct. Therefore, it is possible to reduce noise leakage outside the vehicle.

Preferably, the exhaust duct is elastic. In this case, it is possible to absorb vertical movements of the muffler cover with the exhaust duct, and it is therefore possible to stably position the rearward end portion of the exhaust duct at the opening of the undercover.

Preferably, the exhaust duct is further fitted to the opening. In this case, the arrangement makes it easy to position and attach the exhaust duct.

Preferably, the vehicle further includes a silencer provided at an outlet of the muffler. In this case, the silencer makes it possible to further attenuate the noise from the muffler, and thereby further reduce noise leakage out of the vehicle.

Preferably, the vehicle further includes a sound absorbing member provided on an inner circumferential surface of the exhaust duct. In this case, the exhaust gas noise emitted from the muffler is attenuated by the sound absorbing member provided on the inner circumferential surface of the exhaust duct, and therefore, it is possible to further reduce noise leakage out of the vehicle.

Preferably, the vehicle further includes a discharge pipe provided at the outlet of the muffler, and the sound absorbing member is located in the exhaust duct, on an extended line of a center axis of the discharge pipe. In this case, the sound absorbing member may be arranged only at necessary place on the inner circumferential surface of the exhaust duct, and therefore it is possible to reduce costs.

Preferably, the vehicle further includes a holding member for holding the sound absorbing member on the inner circumferential surface of the exhaust duct, and the holding member is provided by a perforated plate. In this case, it is possible to provide the sound absorbing member reliably on the inner circumferential surface of the exhaust duct while maintaining the sound absorbing capabilities of the sound absorbing member.

Preferably, the vehicle further includes an open/close member provided inside the exhaust duct, and the open/close member is configured to be opened when the vehicle is traveling and closed when the vehicle is stopped. In this case, when the vehicle is moving, the open/close member opens, thereby enabling exhaust gas from the muffler to discharge smoothly to the outside from below the engine room via the exhaust duct and the opening of the undercover. On the other hand, when the vehicle is stopped, the open/close member closes, whereby it is possible to further attenuate noises such as noise from the muffler and vibration noise of the engine which propagates through the muffler cover, inside the exhaust duct, and therefore to further reduce noise leakage outside the vehicle.

Preferably, the open/close member is further configured to be opened by the exhaust gas passing through the exhaust duct. In this case, there is no need for providing any separate parts for opening the open/close member yet it is possible to open the open/close member.

Preferably, the open/close member is opened to an amount in accordance with an exhaust gas pressure received by the open/close member. In this case, as the exhaust gas pressure (amount of exhaust gas) increases, the amount of opening of the open/close member increases. Therefore, when the engine is running at a slow speed (e.g., not greater than 2500 rpm), the exhaust gas pressure (amount of exhaust gas) is small and the open/close member is half open, so it is possible to achieve both discharging of the exhaust gas and reducing noise leakage to outside of the vehicle. The arrangement is particularly effective when the vehicle is traveling at a constant speed.

Preferably, the vehicle further includes a cooling hole provided in the exhaust duct, and the cooling hole penetrates an inner circumferential surface and an outer circumferential surface of the exhaust duct on a more downstream side than the open/close member but near the open/close member in its closed state. In this case, it is possible to cool the open/close member and therefore reduce deterioration of the open/close member due to heat.

### ADVANTAGEOUS EFFECTS OF INVENTION

According to the present invention, it is possible to obtain a vehicle which is capable of reducing sound leakage out of the vehicle

### BRIEF DESCRIPTION OF DRAWINGS

Fig. 1 is a side view (taken from left) showing a golf car or golf cart according to an embodiment of the present invention.
Fig. 2 is a rear perspective view showing the golf car according to the embodiment of the present invention.
Fig. 3 is a rear perspective view showing primary part of a frame portion.
Fig. 4 is a rear perspective view showing part of the frame portion, a transmission and their surroundings.
Fig. 5 is a rear perspective view showing primary part of the frame portion and a front cover portion.
Fig. 6 is a perspective view showing the frame portion and its surroundings.
Fig. 7 is a perspective view showing the frame portion, an undercover and their surroundings.
Fig. 8 is a rear perspective view showing the frame portion, a floor panel, and so on.
Fig. 9 is a plan view showing the frame portion, the floor panel, and so on.
Fig. 10(a) is an enlarged view showing an opening; Fig. 10 (b) is an enlarged view showing a platy member; and Fig. 10(c) is an enlarged view showing a cover portion.
Fig. 11 is a front perspective view showing primary part of the golf car.
Fig. 12 is a front perspective view showing primary part of the golf car.
Fig. 13 is a rear perspective view showing primary part of the golf car.
Fig. 14 is a plan view showing primary part of the golf car.
Fig. 15 is a side view (taken from left) showing the frame portion, the floor panel, and so on.
Fig. 16 is a side view (taken from right) showing the frame portion, a groove portion and so on, under a state where part of the floor panel on a more right side than the groove portion is removed.
Fig. 17 is a front view with a partial section taken along a line A-A in Fig. 15 to show an engine, a muffler and their surroundings.
Fig. 18 is a plan view with a partial section taken along a line B-B in Fig. 15 to show the engine, the muffler and their surroundings.
Fig. 19 is a plan view showing the engine, a muffler cover and their surroundings.
Fig. 20 is a front perspective view showing the engine, the muffler cover and their surroundings.
Fig. 21 is a rear perspective view showing the engine, the muffler cover and their surroundings.
Fig. 22 is a side view with a partial section taken in a line C-C in Fig. 19 to show the muffler, the muffler cover, an exhaust duct and their surroundings.
Fig. 23 is a side view with a partial section, to show the muffler, the muffler cover and the exhaust duct.
Fig. 24 is an illustrative sectional drawing showing the exhaust duct and its surroundings.
Fig. 25 is an illustrative sectional drawing showing a primary part in an embodiment including an open/close member and a cooling hole.
Fig. 26 shows the open/close member, a holding member and so on viewed from the direction of Arrow D (see Fig. 25), in a state where the open/close member is opened.
Fig. 27 shows the exhaust duct, the open/close member, the holding member and so on viewed from the direction of Arrow E (see Fig. 25), in a state where the open/close member is closed.
Fig. 28 shows the exhaust duct, the cooling hole, the holding member and so on viewed from the direction of Arrow F (see Fig. 25).
Fig. 29(a) is an illustrative drawing showing a flow of exhaust gas in the state where the open/close member is opened; Fig. 29(b) is an illustrative drawing showing sound pressure changes and a direction in which exhaust heat is directed, under the state where the open/close member is closed.

### DESCRIPTION OF EMBODIMENTS

Hereinafter, embodiments of the present invention will be described with reference to the drawings. Herein, description will be made for a case where the present invention is applied to a golf car 10 as an example of a vehicle. It is noted that the terms front and rear, right and left, up and down as used in the following description are determined from the golf car driver's position on a seat portion 18 of the golf car 10, with the driver facing toward a steering wheel 30.

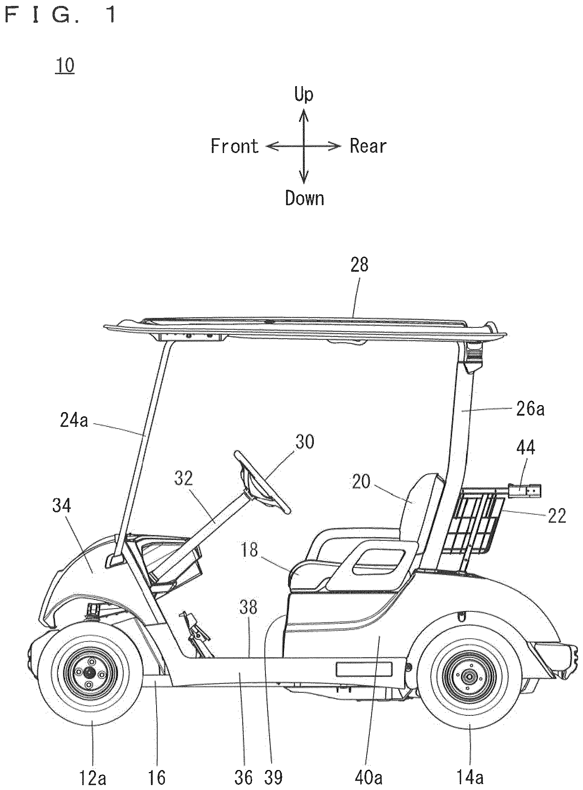

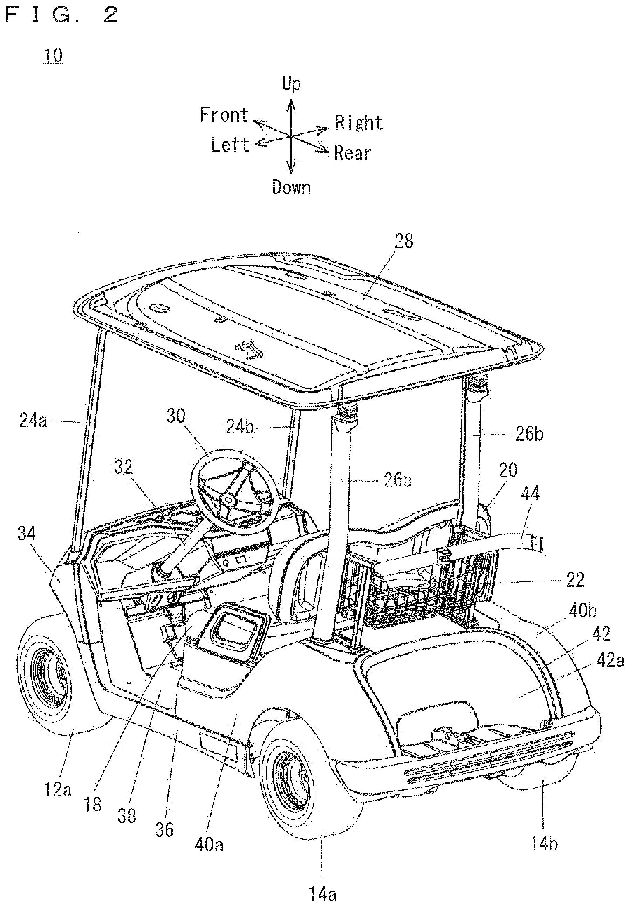

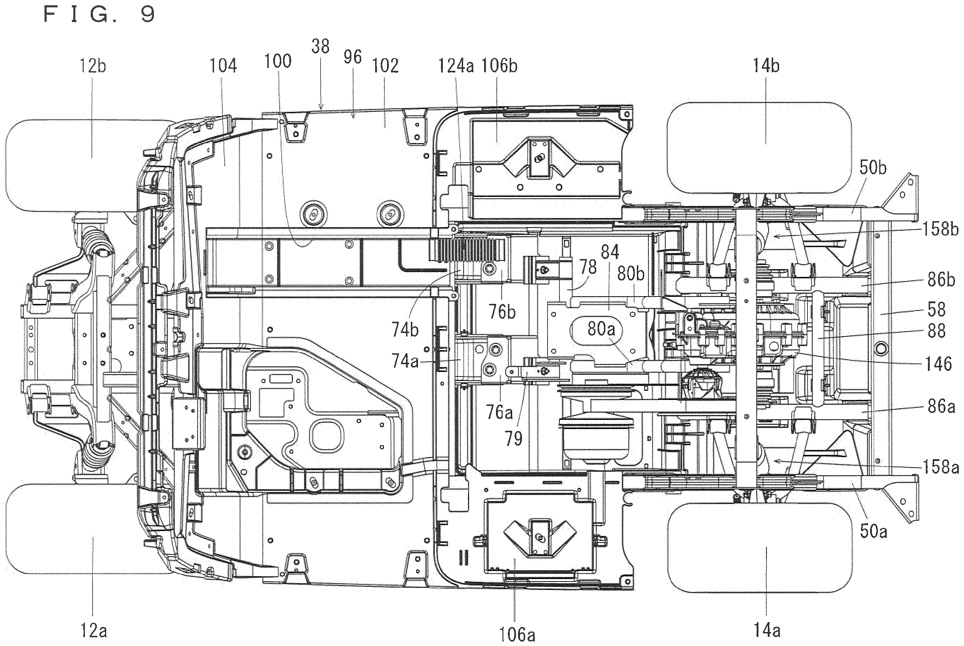

Referring to Fig. 1 and Fig. 2, the golf car 10 is a two-person golf car, and includes a pair of front wheels 12a, 12b (see Fig. 9), a pair of rear wheels 14a, 14b and a frame portion 16. The pair of rear wheels 14a, 14b is located at more rearward positions than the pair of front wheels 12a, 12b. The pair of front wheels 12a, 12b is supported rotatably at a front region of the frame portion 16. The pair of rear wheels 14a, 14b is supported rotatably at a rear region of the frame portion 16.

The seat portion 18 extends in a width direction of the golf car 10 at a more rearward position than the pair of front wheels 12a, 12b, but at a more forward position than the pair of rear wheels 14a, 14b. The seat portion 18 is supported by a seat rail 72 (which will be described later) of the frame portion 16. A seat back 20 is provided at an obliquely upward and rearward position of the seat portion 18. A basket 22 for accommodating baggage is provided behind the seat back 20. The seat back 20 and the basket 22 are supported by rear pillars 26a, 26b which will be described later.

A pair of front pillars 24a, 24b is provided at more forward positions than the seat portion 18, whereas a pair of rear pillars 26a, 26b is provided at more rearward positions than the seat portion 18. The front pillars 24a, 24b and the rear pillars 26a, 26b are supported by the frame portion 16 at their lower end portions. The front pillars 24a, 24b and the rear pillars 26a, 26b extend from below to above, while tilting slightly rearward. A roof portion 28 covers above the seat portion 18, and is supported by the front pillars 24a, 24b and the rear pillars 26a, 26b.

A steering wheel 30 is located ahead of the seat back 20. The steering wheel 30 is connected to the front wheels 12a, 12b via a steering shaft 32 and an unillustrated connection mechanism.

The frame portion 16 is covered with a cowl 34, a pair of side protectors 36, a floor panel 38, a body panel 39, a pair of rear fender covers 40a, 40b and a rear floor cover 42, each made of a resin for example. The cowl 34 covers the front region of the frame portion 16 and above the front wheels 12a, 12b. The pair of side protectors 36 covers an intermediate region of the frame portion 16 from two sides. The floor panel 38, which functions as a footrest for the driver and the passenger sitting on the seat portion 18 to rest their feet, provides a bottom portion of a cabin space of the golf car 10. The body panel 39 covers a front region below the seat portion 18. The pair of rear fender covers 40a, 40b cover two sides below the seat portion 18 and above the pair of rear wheels 14a, 14b. The rear floor cover 42 is sandwiched by rear end portions of the pair of rear fender covers 40a, 40b, and has a concave portion 42a for placement of golf bags for example. By only removing the rear floor cover 42, it becomes possible to easily maintain a CVT (Continuously Variable Transmission) 144 (which will be described later) and a transmission 146 (which will be described later). At a position above the concave portion 42a and behind the basket 22, there is provided a holding portion 44 for holding the golf bags. The holding portion 44 is supported by connecting members 70a, 70b (which will be described later).

Next, description will cover a structure of the frame portion 16 and its surroundings.

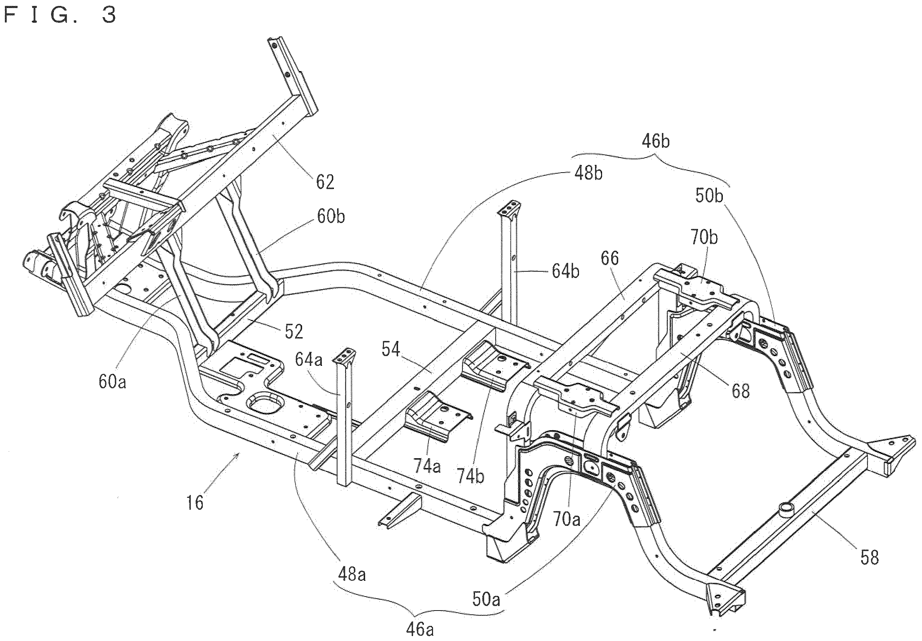

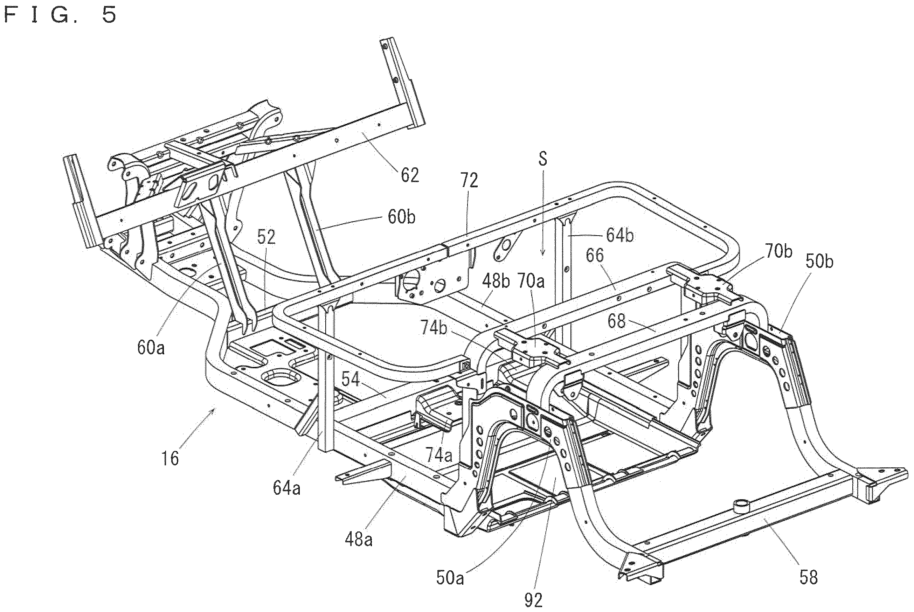

Referring to Fig. 3 through Fig. 7, the frame portion 16 includes a pair of main frames 46a, 46b which are spaced apart from each other in a width direction of the vehicle and extend in a fore-aft direction of the vehicle; cross members 52, 54, 56, 58, and a pair of support frames 60a, 60b. The pair of main frames 46a, 46b respectively include front frames 48a, 48b extending in the fore-aft direction; and rear frames 50a, 50b extending rearward from rear end portions of the respective front frames 48a, 48b. The pair of front frames 48a, 48b are formed so that their front end portions have a narrower space from each other than their rear end portions do. The pair of rear frames 50a, 50b is curved to project upward.

The front frames 48a, 48b are connected to each other by the cross members 52, 54. A portion where the front frame 48a and the rear frame 50a are joined to each other and a portion where the front frame 48b and the rear frame 50b are joined to each other are connected to each other by the cross member 56. The rear frames 50a, 50b have their rear end portions connected to each other by the cross member 58. In other words, the main frames 46a, 46b are connected to each other by the cross members 52, 54, 56, 58 which extend in the vehicle's width direction. The cross members 52, 54, 56, 58 are spaced apart from each other in the vehicle's fore-aft direction, and are disposed in this order from a front to a rear of the vehicle. The cross member 52 is joined to the pair of support frames 60a, 60b which extend obliquely forward.

The pair of support frames 60a, 60b have their front end portions support a cross member 62 which extends in the vehicle's width direction. Near the cross member 54 in the pair of front frames 48a, 48b, a pair of support frames 64a, 64b which extend upward are joined. Also, the pair of rear frames 50a, 50b has their front portions connected to each other by a connection frame 66. The pair of rear frames 50a, 50b has their intermediate regions connected to each other by a connection frame 68. The connection frame 66 extends in the vehicle's width direction, with its two end portions extending downward, to provide an upward projecting substantially U shape . The connection frame 68 extends in the vehicle's width direction, with its two end portions extending downward, to provide an upward projecting substantially U shape. The connection frames 66 and 68 are spaced apart from each other in the vehicle's fore-aft direction, and are connected to each other by the connecting members 70a, 70b. Further, the pair of support frames 64a, 64b have their upper end portions; the connection frame 66 have two side portions; and these portions are connected to each other by the seat rail 72. The seat rail 72 is formed substantially in a C shape extending in a horizontal direction. To the cross member 54, a pair of brackets 74a, 74b are attached side by side in the vehicle's width direction.

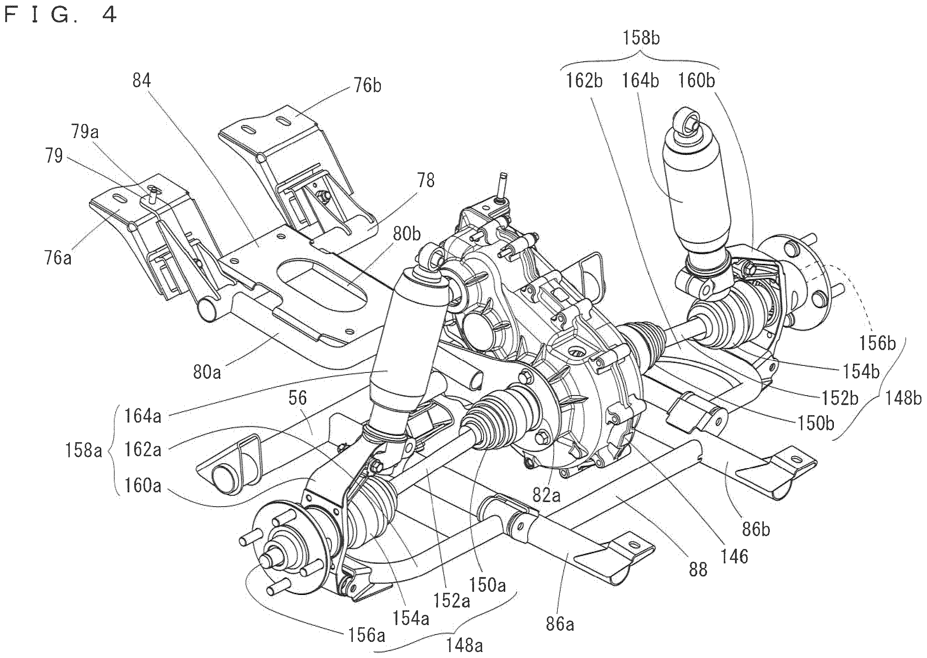

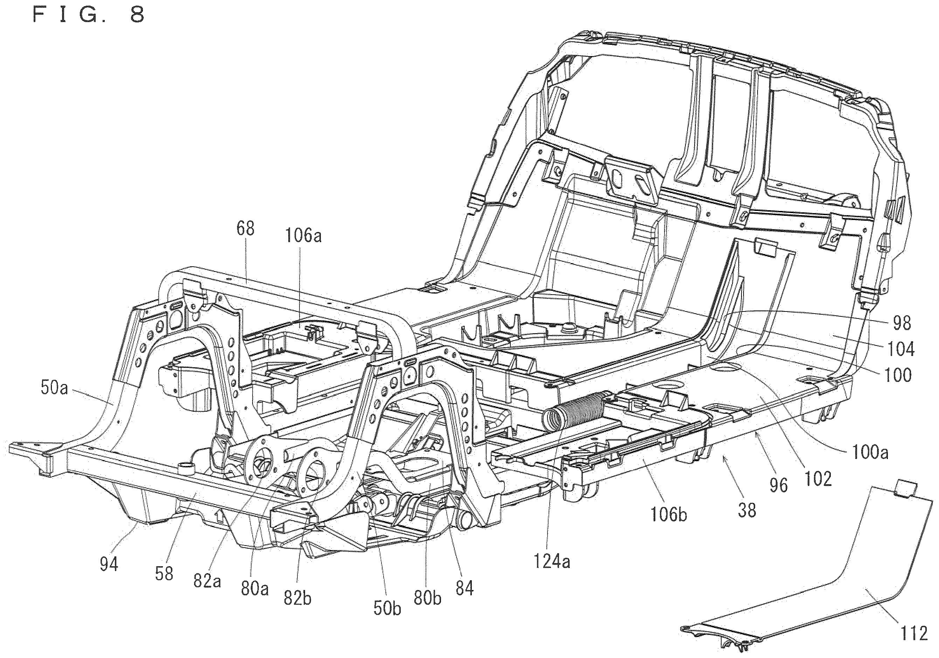

Referring to Fig. 4, a pair of engine brackets 76a, 76b is joined to the pair of brackets 74a, 74b. The engine brackets 76a, 76b are connected to each other via a cross member 78. The cross member 78 is joined to a support frame 79 which extends forward and support frames 80a, 80b which extend rearward. The support frame 79 has its tip portion formed with a projection 79a. The support frames 80a, 80b have their respective rear end portions formed with through-holes 82a, 82b (see Fig. 8) . On the cross member 78 and the support frames 80a, 80b, there is attached an engine bracket 84 for supporting an engine 114 (which will be described later) . The cross member 78 is joined to the engine brackets 76a, 76b pivotably in an up-down direction. Accordingly, the engine bracket 84 is also pivotable in the up-down direction. The cross member 56 is joined to a pair of frames 86a, 86b which extend rearward. The pair of frames 86a, 86b are connected to each other at regions near their rear end portions, by a cross member 88. The pair of frames 86a, 86b have their rear end portions joined to the cross member 58.

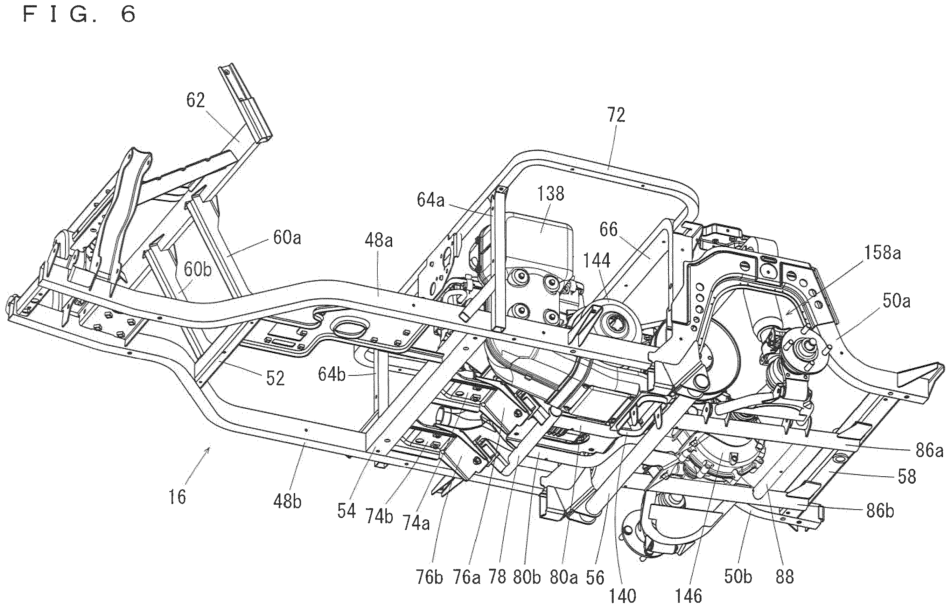

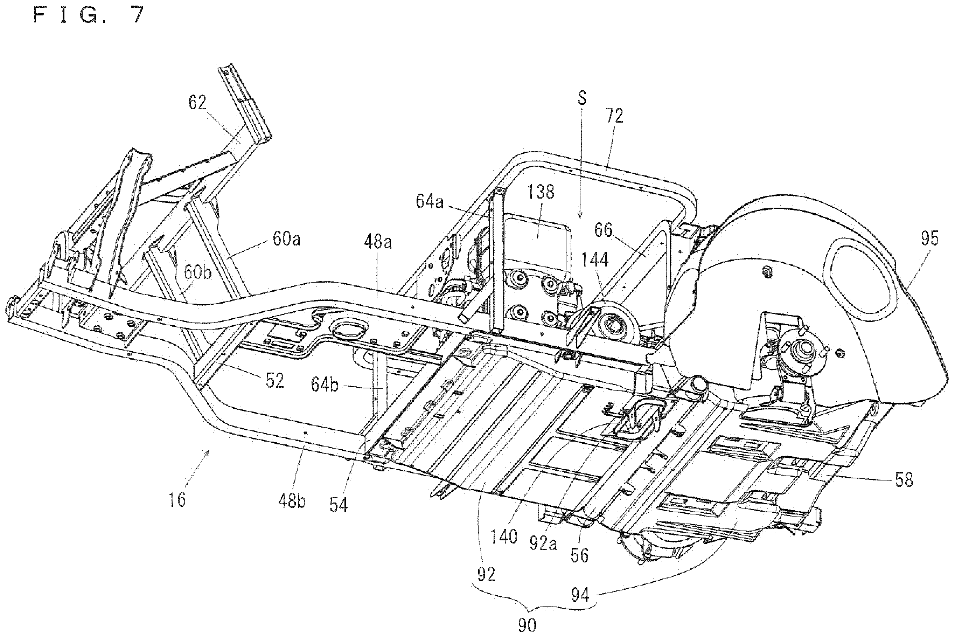

Referring to Fig. 6 and Fig. 7, the frame portion 16 supports an undercover 90. The undercover 90 has a front cover portion 92 and a rear cover portion 94 respectively on its forward and rearward sides. The front cover portion 92 is located between the cross members 54 and 56, and is attached to the pair of front frames 48a and 48b, and to the cross members 54 and 56. The rear cover portion 94 is located between the cross members 56 and 58, and is attached to the cross members 56 and 88, the frames 86a, 86b, and the rear frames 50a, 50b. To the rear frames 50a, 50b, a pair of inner cowls 95 (the inner cowl on the right side is not shown) are attached respectively. The pair of inner cowls 95 is placed between the rear wheels 14a, 14b and the rear fender covers 40a, 40b to cover above the respective rear wheels 14a, 14b.

The undercover 90, the seat portion 18, the body panel 39, a heat insulation board 176 (which will be described later), a fuel tank 168 (which will be described later), the left and the right inner cowls 95 and the rear floor cover 42 define a space as an engine room S. In other words, the engine room S is surrounded by the undercover 90, the seat portion 18, the body panel 39, the heat insulation board 176, the fuel tank 168, the left and the right inner cowls 95 and the rear floor cover 42. In other words, on an under side, an upper side, a front side, a left side, a right side and a rear side of the engine room S, there are provided the undercover 90, the seat portion 18, the body panel 39, the heat insulation board 176 and the left inner cowl 95, the fuel tank 168 and the right inner cowl 95, and the rear floor cover 42 respectively. The undercover 90 is provided at a lower place than the engine 114, and defines an under side of the engine room S. As described, the engine room S is surrounded with the undercover 90, the seat portion 18, the body panel 39, the heat insulation board 176, the fuel tank 168, the left and the right inner cowls 95 and the rear floor cover 42, whereby it is possible to reduce leakage of noise of the engine room S to outside of the engine room S.

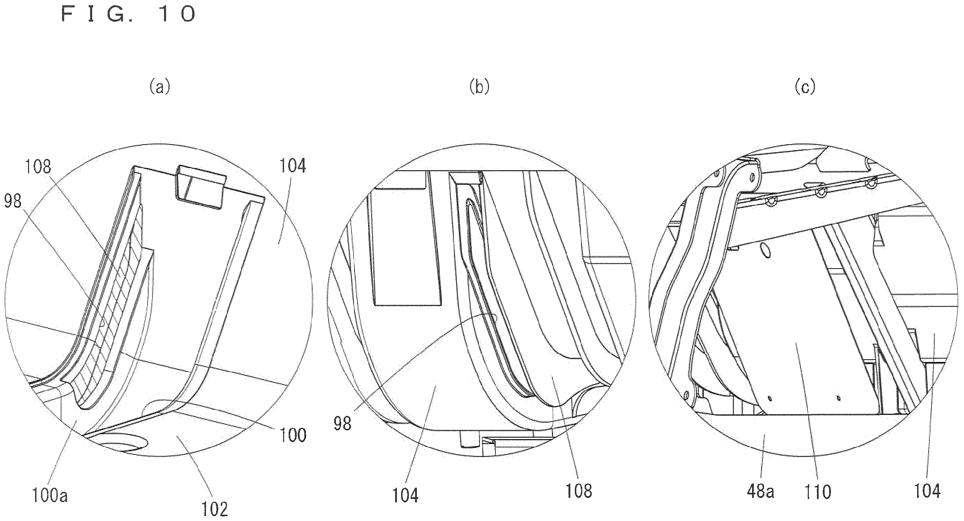

Referring to Fig. 8 and Fig. 9, the floor panel 38 is placed on the front frames 48a, 48b and the cross member 62 of the above-described frame portion 16. The floor panel 38 is placed between the pair of front wheels 12a, 12b and the pair of rear wheels 14a, 14b. The floor panel 38 includes a panel main body 96, an opening 98 and a groove portion 100. The panel main body 96 includes a first panel portion 102 extending substantially horizontally in the fore-aft direction between the front wheels 12a, 12b and the rear wheels 14a, 14b; a second panel portion 104 placed behind the front wheels 12a, 12b and extending upward from a front end region of the first panel portion 102; and third panel portions 106a, 106b extending rearward from left and right rear end regions of the first panel portion 102. The first panel portion 102 is located ahead of the engine room S; the third panel portion 106a is located on the left side of the engine room S; and the third panel portion 106b is located on the right side of the engine room S. Preferably, the second panel portion 104 rises obliquely forward from the front end region of the first panel portion 102. The opening 98 is located at a front region of the panel main body 96, i.e., in the second panel portion 104 (see Fig. 10(a)). Fig. 10(a) shows the opening 98 with hatching. The groove portion 100 communicates with the opening 98 in order to supply external air which is introduced from the opening 98 into a shroud 132 (which will be described later) and into the engine 114, is placed on an upper surface of the panel main body 96, and extends in a fore-aft direction of the panel main body 96. The groove portion 100 is continuous from the second panel portion 104 to the first panel portion 102, provides communication between the opening 98 and the engine room S, and is capable of introducing a running wind from ahead of the golf car 10 to the engine room S. In the present embodiment, the groove portion 100 is formed on a slightly righter side than the center, in the vehicle's width direction. The opening 98 is placed in a side surface 100a of the groove portion 100. Referring to Fig. 10(a) and Fig. 10(b), a platy member 108, which protrudes forward from a reverse surface (front surface) of the second panel portion 104, is provided on a side of the opening 98. Also, referring to Fig. 10(c), a rectangular plate-like cover portion 110, which is supported by the frame portion 16, is provided ahead of the opening 98. Further, the groove portion 100 is covered by a lid portion 112 (see Fig. 8). The lid portion 112 is provided by a strip-like platy member formed to a longitudinal shape of the groove portion 100.

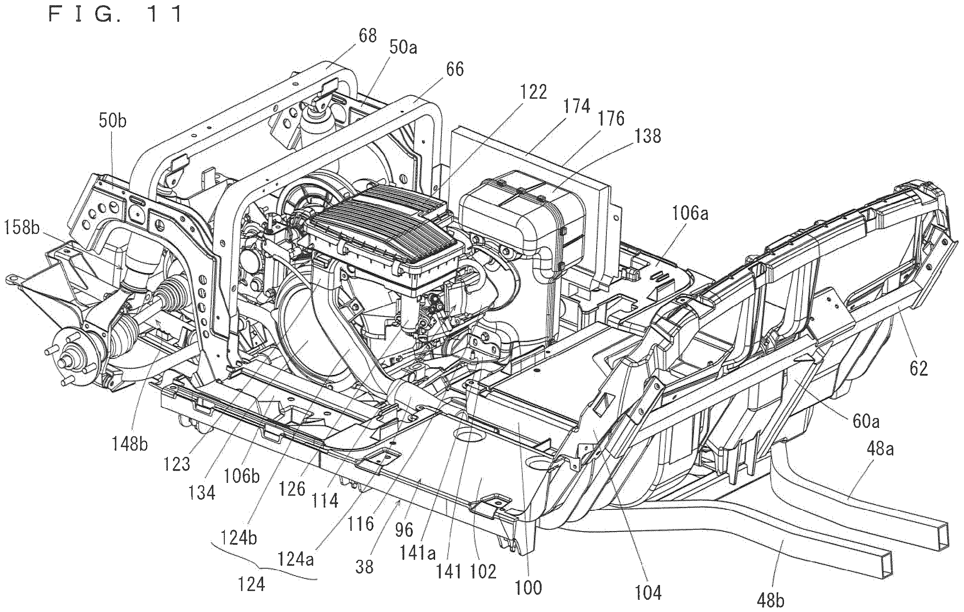

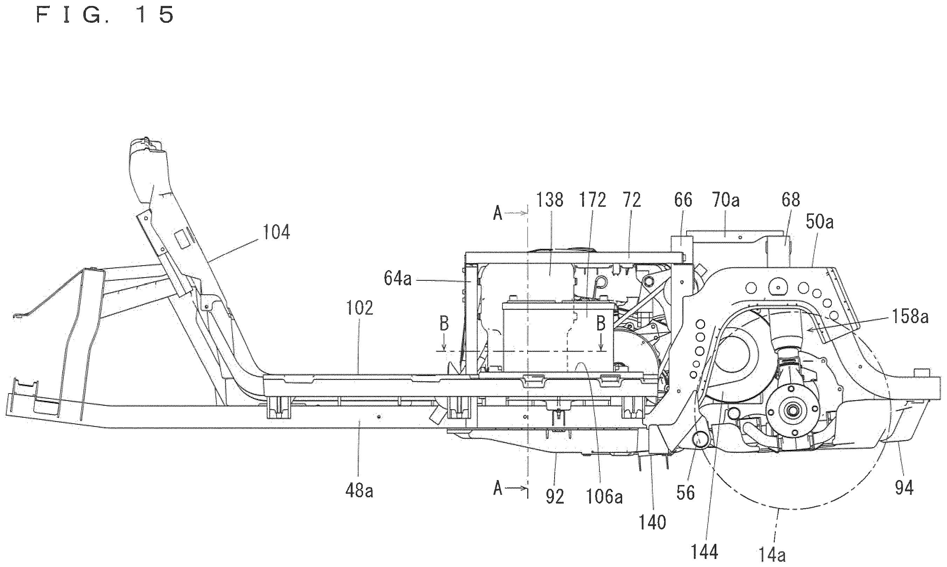

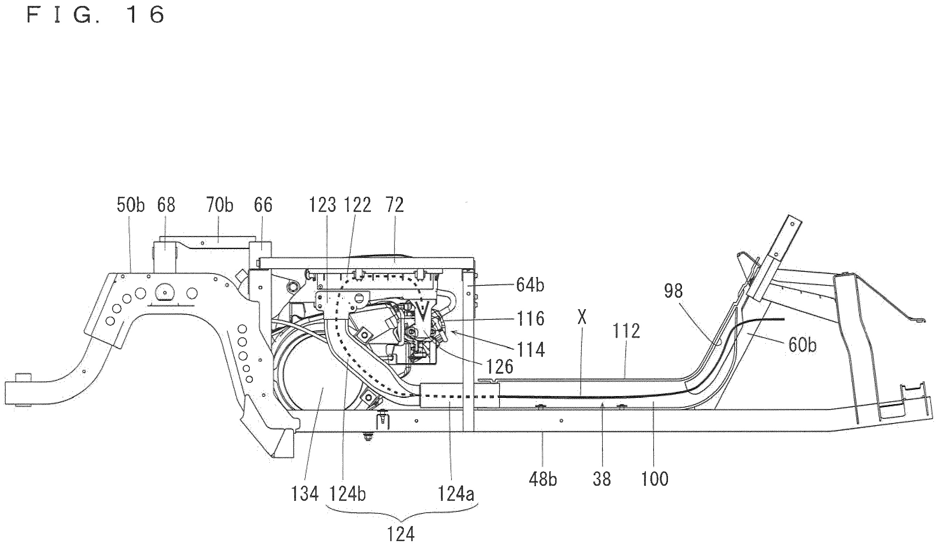

Referring to Fig. 11 through Fig. 17, inside the engine room S, the engine bracket 84 supports the engine 114. The engine 114 is an air-cooled engine which provides a single-cylinder, for example. The engine 114 provides a fuel injection device 115 which injects fuel into an air intake tube 126. The engine 114 is placed behind the first panel portion 102 of the floor panel 38, and includes a cylinder head 116, a cylinder body 118 and a crank case 120. The engine 114 is tilted forward. An air cleaner 122 is provided above the engine 114. The air cleaner 122 is joined to an air intake duct 124 via a joint 123. The air intake duct 124 is located on the right side of the air cleaner 122, and includes a cylindrical front duct 124a and a noise-reducing rear duct 124b of a flattened shape. A rear end portion of the front duct 124a and a front end portion of the rear duct 124b are joined to each other. In order to introduce the external air from the groove portion 100, the front duct 124a is disposed to face the groove portion 100 from the engine room S, and a rear end portion of the rear duct 124b is joined to the joint 123. Thus, the air intake duct 124 and the air cleaner 122 communicate with each other. As indicated by Arrow X in Fig. 16, the external air, which is introduced from ahead and comes through the opening 98 and into the groove portion 100, is then introduced into the air cleaner 122 from the groove portion 100 via the air intake duct 124. Then, after being cleaned by the air cleaner 122, the air is supplied, via the air intake tube 126, into the engine 114. As understood, the air cleaner 122 is provided between the air intake duct 124 and the engine 114. Inside the engine room S, a muffler 128 is provided adjacently on a side (on the left side in the present embodiment) of the engine 114. The engine 114 and the muffler 128 are joined to each other via an exhaust pipe 130. Exhaust gas from the engine 114 is supplied to the muffler 128 via the exhaust pipe 130.

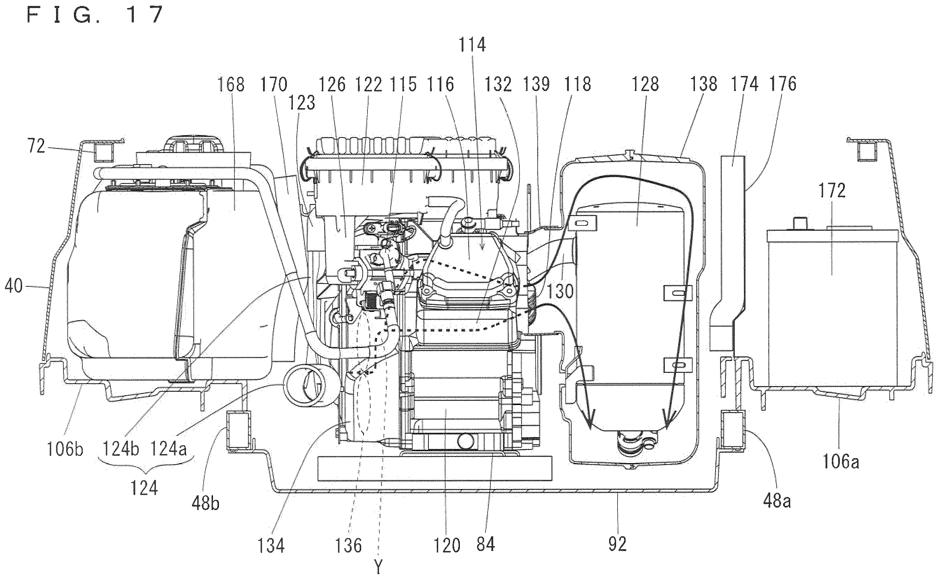

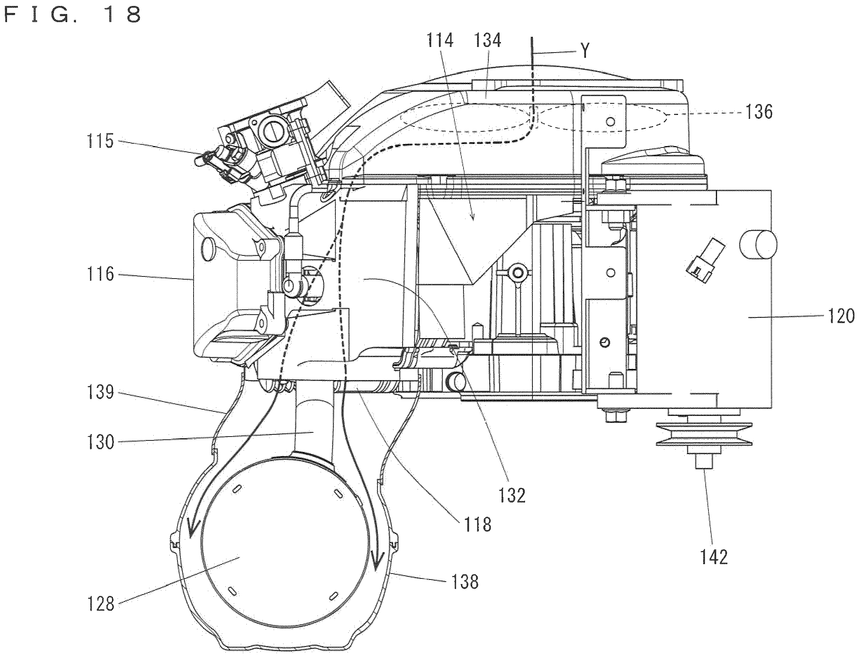

The cylinder body 118 of the engine 114 is covered by the shroud 132, with an air-flowable gap between the cylinder body 118 and the shroud 132. A fan case 134 is provided on a side surface (on the right side surface in the present embodiment) of the engine 114. The shroud 132 and the fan case 134 are connected to each other. Inside the fan case 134, there is provided a fan 136 for supplying the external air from the groove portion 100 into the shroud 132 (between the shroud 132 and the engine 114). The fan 136 is preferably connected to a crank shaft 142 (see Fig. 18) and driven thereby. Also, the muffler 128 is covered by a muffler cover 138 so that an air-flowable gap is formed between the muffler 128 and the muffler cover 138. The shroud 132 and the muffler cover 138 communicate with each other via a duct 139 which covers the exhaust pipe 130. It should be noted here that Fig. 11, Fig. 12, Fig. 20 and Fig. 21 do not show the duct 139. An exhaust duct 140 is connected to an exit end portion of the muffler cover 138. The exhaust duct 140 has its rear end portion exposed to the outside from an opening 92a of the front cover portion 92 (see Fig. 7, Fig. 20 and Fig. 22). The muffler cover 138 is supported by the support frame 79 (see Fig. 4 and Fig. 11), as the projection 79a of the support frame 79 is inserted through a hole 141a of a bracket 141 attached on a side surface of the muffler cover 138. As indicated by Arrow Y in Fig. 17 and Fig. 18, the external air which is introduced into the shroud 132 by the fan 136 flows between the shroud 132 and the engine 114 (the cylinder body 118), into the muffler cover 138 (between the muffler cover 138 and the muffler 128), and serves as a cooling wind to cool the engine 114 and the muffler 128. Then, the air inside the muffler cover 138 flows through the exhaust duct 140 and is discharged from the opening 92a of the front cover portion 92, to the outside, below the engine room S. The muffler 128, the muffler cover 138, the exhaust duct 140 and their surroundings will be described later.

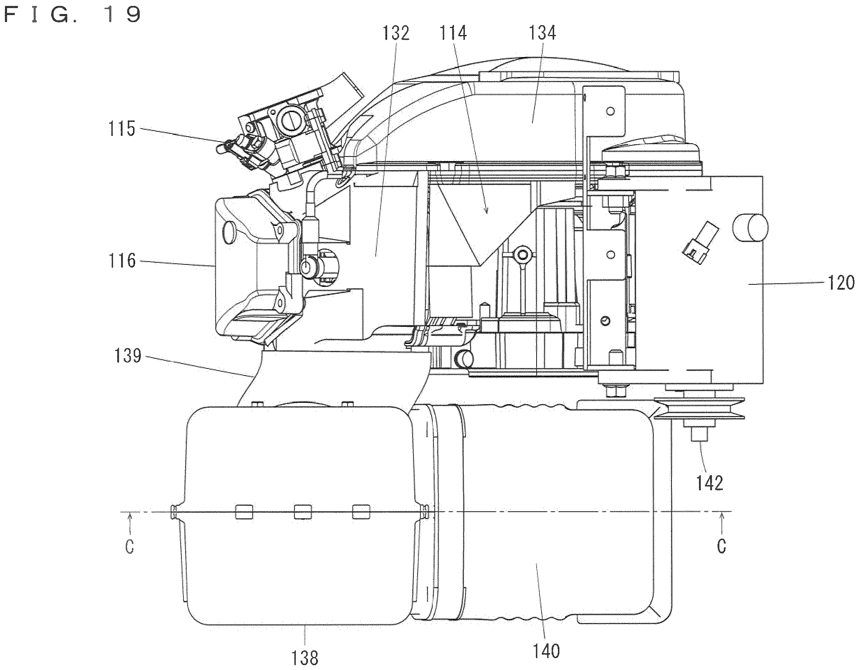

Referring also to Fig. 18 through Fig. 21, an output from the crank shaft 142 of the engine 114 is transmitted via the CVT (Continuously Variable Transmission) 144 to the transmission 146. The CVT 144 is located behind the muffler 128, whereas the transmission 146 is located behind the engine 114, between the pair of rear wheels 14a, 14b.

The engine 114, the muffler 128, the shroud 132, the muffler cover 138, the exhaust duct 140, the CVT 144 and the transmission 146 described above are housed in the engine room S.

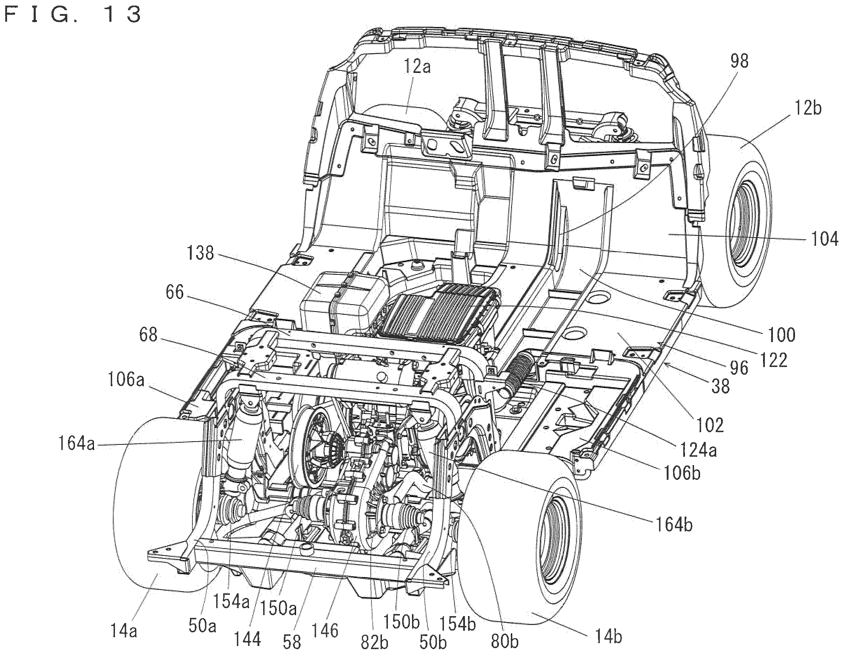

Referring also to Fig. 4, the transmission 146 is joined to a pair of rotation transmission portions 148a, 148b. The rotation transmission portion 148a extends to the left of the transmission 146, and includes a constant-velocity joint 150a, a drive shaft 152a, a constant-velocity joint 154a and an axle 156a. The transmission 146 has its output shaft (not illustrated) connected to the drive shaft 152a by the constant-velocity joint 150a, whereas the drive shaft 152a and the axle 156a are connected to each other by the constant-velocity joint 154a. The rotation transmission portion 148b extends to the right of the transmission 146, and includes a constant-velocity joint 150b, a drive shaft 152b, a constant-velocity joint 154b and an axle 156b. The transmission 146 has its output shaft connected to the drive shaft 152b by the constant-velocity joint 150b, whereas the drive shaft 152b and the axle 156b are connected to each other by the constant-velocity joint 154b. The axle 156a supports the rear wheel 14a, whereas the axle 156b supports the rear wheel 14b. It should be noted here that the through-hole 82a at the rear end portion of the support frame 80a is penetrated by the output shaft of the transmission 146 between the transmission 146 and the constant-velocity joint 150a, whereas the through-hole 82b at the rear end portion of the support frame 80b is penetrated by the output shaft of the transmission 146 between the transmission 146 and the constant-velocity joint 150b (see Fig. 13).

Also, the pair of rear wheels 14a, 14b is suspended by a pair of suspensions 158a, 158b. In the present embodiment, the pair of suspensions 158a, 158b is provided by independent suspension systems. The pair of suspensions 158a, 158b includes knuckles 160a, 160b, arms 162a, 162b and shock absorbers 164a, 164b respectively. The knuckle 160a supports the axle 156a rotatably. The arm 162a connects a lower portion of the knuckle 160a and the frame 86a to each other. The shock absorber 164a has a lower end portion and an upper end portion, respectively joined to an upper end portion of the knuckle 160a and to the connection frame 68. Likewise, the knuckle 160b supports the axle 156b rotatably. The arm 162b connects a lower portion of the knuckle 160b and the frame 86b to each other. The shock absorber 164b has a lower end portion and an upper end portion, respectively joined to an upper end portion of the knuckle 160b and to the connection frame 68.

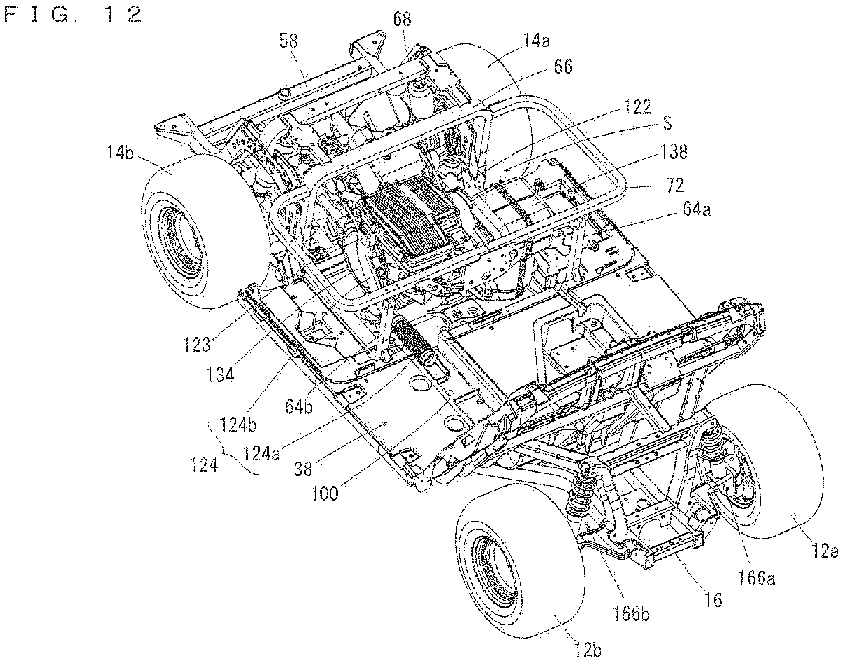

Referring to Fig. 12, the pair of front wheels 12a, 12b is suspended by a pair of suspensions 166a, 166b attached to the front region of the frame portion 16. In the present embodiment, the pair of suspensions 166a, 166b is provided by independent suspension systems.

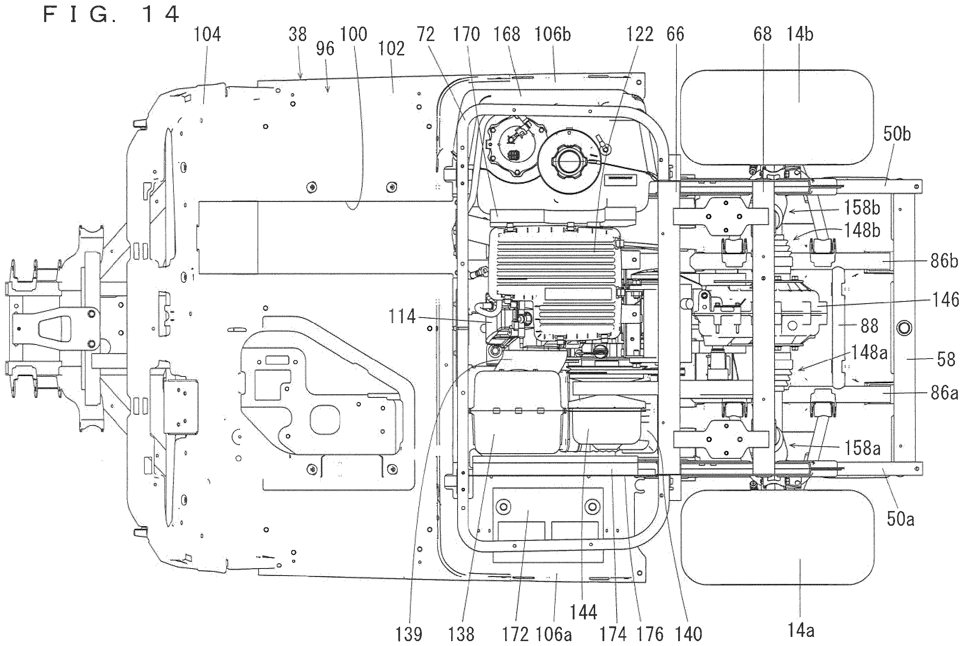

Referring to Fig. 14 and Fig. 17, the fuel tank 168 is placed on the right side of the engine 114 and on the third panel portion 106b of the floor panel 38. Between the engine 114 and the fuel tank 168, a sound absorbing member 170 is erected and attached to a side surface of the fuel tank 168. Also, a battery 172 is placed on the left of the muffler cover 138 and on the third panel portion 106a of the floor panel 38. Between the muffler cover 138 and the battery 172, a two-ply structure made of a sound absorbing member 174 and the heat insulation board 176 is erected. It is possible, with the sound absorbing members 170 and 174, to absorb noise from the engine room S, whereas it is possible, with the heat insulation board 176, to reduce heat conducting from the engine room S to the battery 172.

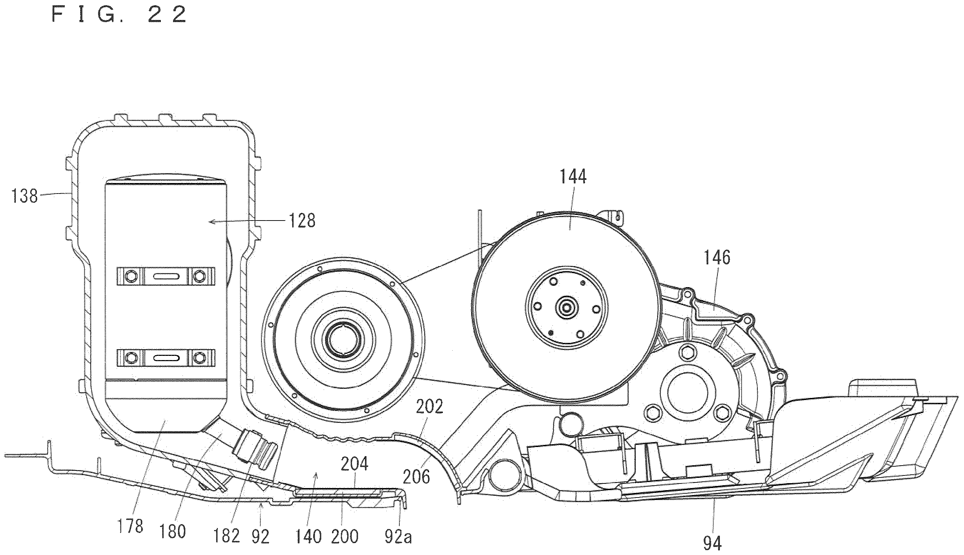

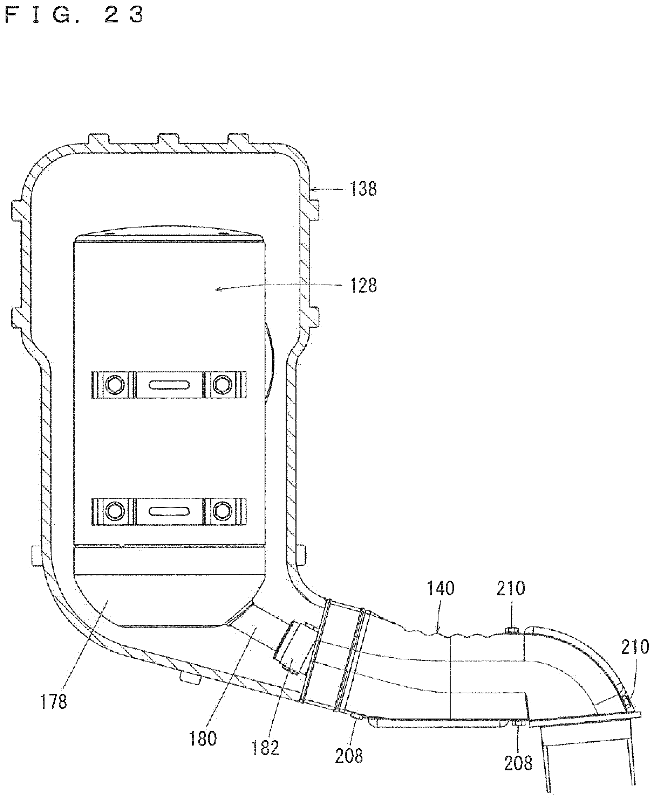

Referring also to Fig. 22 through Fig. 24, the muffler 128, the muffler cover 138, the exhaust duct 140 and their surroundings will be described.

The muffler 128 has an expansion chamber 178 at its rear portion, which is stuffed with a sound absorbing material such as glass wool for example. The expansion chamber 178 reduces exhaust gas noise. The expansion chamber 178 is provided with a discharge pipe 180 extending obliquely rearward and downward. In other words, the muffler 128 has an outlet (where exhaust gas is discharged), at which the discharge pipe 180 is provided. The discharge pipe 180 has a rearward end portion, at which a joint exhaust 182 is attached.

The joint exhaust 182 includes a silencer 184, a seal member 186, a holding member 188, a cap member 190 and a fastener 192. The silencer 184 is made of a stainless steel mesh member for example, is provided at the outlet of the muffler 128 via the discharge pipe 180, reduces thrust of the exhaust gas, and alters sound quality of the exhaust gas noise. The seal member 186 is hollow cylindrical, and is fitted around a rearward end portion of the discharge pipe 180. The cylindrical holding member 188 and the annular cap member 190 are formed integrally with each other, and hold the silencer 184 and the seal member 186. The fastener 192 is fitted around an outer circumferential surface of the holding member 188 to tighten the holding member 188 so that the holding member 188 presses the silencer 184 and the seal member 186 radially inward.

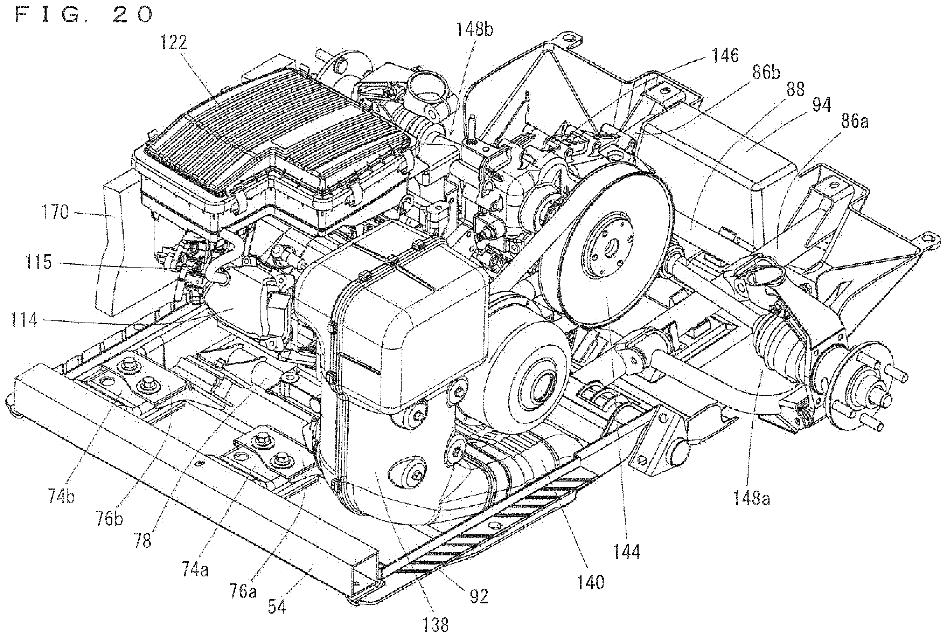

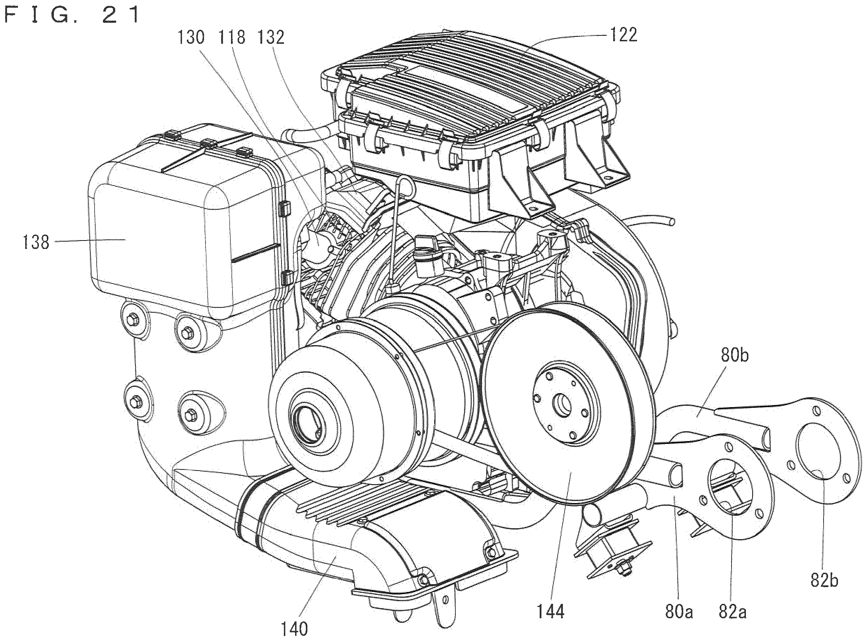

The muffler cover 138 is made of a resin for example, provided with an insulation member (not illustrated) on its inner surface, and formed to have a generally rectangular tubular upper portion and a generally cylindrical lower portion (see Fig. 20 and Fig. 21).

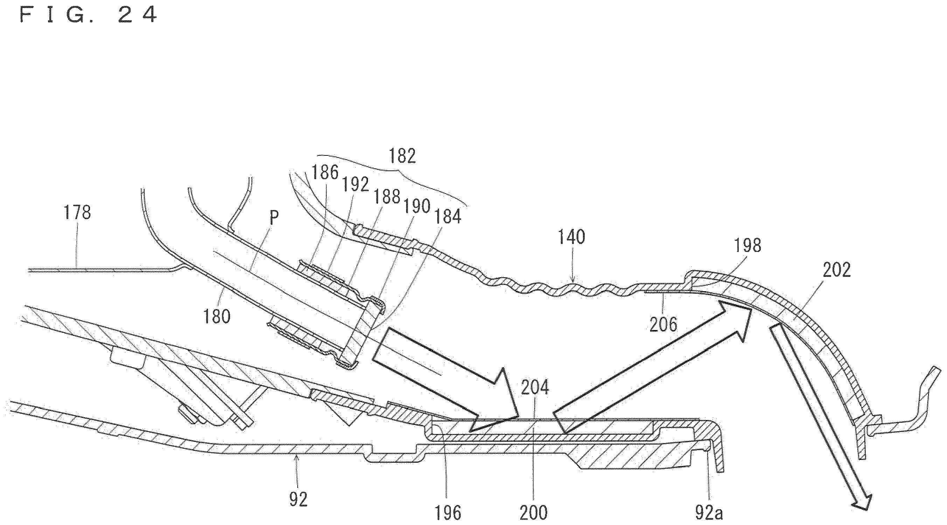

The exhaust duct 140 is made of rubber, for example, is elastic and formed into a flattened shape (see Fig. 20 and Fig. 21). In order to discharge the exhaust gas from below the engine room S to the outside, the exhaust duct 140 extends rearward above the undercover 90 (the front cover portion 92), so that a rearward end portion of the exhaust duct 140 is positioned at the opening 92a of the front cover portion 92 and is fitted into the opening 92a. The opening 92a is located at a more rearward position than the muffler 128 in a side view. Also, the opening 92a is located at a more rearward position than the muffler cover 138 in a side view. The exhaust duct 140 has recesses 196, 198 respectively at lower and upper portions in its inner circumferential surface. In the present embodiment, portions of an outer circumferential surface of the exhaust duct 140 corresponding to the recesses 196, 198 are rectangularly protruded outward (see Fig. 6 and Fig. 21) . Sound absorbing members 200, 202 are fitted into the recesses 196, 198 respectively. In this way, the sound absorbing member 200 is arranged on the inner circumferential surface of the exhaust duct 140 on an extended line of a center axis P of the discharge pipe 180 which is provided at the outlet of the muffler 128. The sound absorbing member 202 is arranged to be hit by exhaust gas after the gas is bounced by the sound absorbing member 200. Preferably, the sound absorbing members 200, 202 are provided by glass wool. In order to hold the sound absorbing members 200, 202 on the inner circumferential surface of the exhaust duct 140, holding members 204, 206 are attached to the inner circumferential surface of the exhaust duct 140. The holding members 204, 206 are provided to cover the respective sound absorbing members 200, 202, and are fixed with fasteners 208, 210. Preferably, the holding members 204, 206 are provided by perforated plates. The perforated plate refers to a platy member having a large number of through-holes. In the present embodiment, the holding members 204, 206 are made of punched metal. As shown in Fig. 24, noise of the exhaust gas emitted from the discharge pipe 180 of the muffler 128 into the exhaust duct 140 is reflected and absorbed by the sound absorbing members 200, 202 as indicated by white arrows. It should be noted here that in Fig. 24, thicknesses of the white arrows indicate sound pressures, to show that exhaust gas noise is gradually attenuated.

According to the golf car 10 as has been described, the exhaust duct 140 which is connected to the exit end portion of the muffler cover 138 extends rearward above the undercover 90 that is provided at a lower position than the engine 114, whereas the exhaust duct 140 has its rearward end portion positioned at the opening 92a which is located at a more rearward position than the muffler 128 in a side view. Exhaust gas from the muffler 128 passes through the exhaust duct 140 and the opening 92a of the undercover 90 (front cover portion 92), and is discharged from below the engine room S to the outside. Since the exhaust duct 140 extends rearward so that the rearward end portion of the exhaust duct 140 is located at a more rearward position than the muffler 128, noise from the muffler 128 is attenuated inside the exhaust duct 140. Also, since the exhaust duct 140 is connected to the muffler cover 138, the cooling wind from the muffler cover 138 passes through the exhaust duct 140 and is discharged from the opening 92a, and noise propagating through the muffler cover 138, such as vibration noise of the engine 114, is attenuated inside the exhaust duct 140. Therefore, it is possible to reduce noise leakage out of the vehicle.

Since the exhaust duct 140 is elastic and is capable of absorbing vertical movements of the muffler cover 138, it is possible to stably position the rearward end portion of the exhaust duct 140 at the opening 92a of the undercover 90.

Since the exhaust duct 140 is fitted into the opening 92a, it is easy to position and attach the exhaust duct 140.

The silencer 184 makes it possible to further attenuate the noise from the muffler 128, and thereby further reduce noise leakage out of the vehicle.

The exhaust gas noise emitted from the muffler 128 is attenuated by the sound absorbing members 200, 202 provided on the inner circumferential surface of the exhaust duct 140. The arrangement further reduces noise leakage out of the vehicle.

Since the sound absorbing members 200, 202 may be arranged only at necessary places on the inner circumferential surface of the exhaust duct 140, the arrangement makes it possible to reduce costs.

The holding members 204, 206 make it possible to reliably hold the sound absorbing members 200, 202 on the inner circumferential surface of the exhaust duct 140.

The arrangement that the holding members 204, 206 are provided by perforated plates, makes it possible to provide the sound absorbing members 200, 202 reliably on the inner circumferential surface of the exhaust duct 140 while maintaining the sound absorbing capabilities of the sound absorbing members 200, 202.

It should be noted here that sound absorbing members may be attached to the seat portion 18, the body panel 39, the rear floor cover 42, the undercover 90 and the left and the right inner cowls 95.

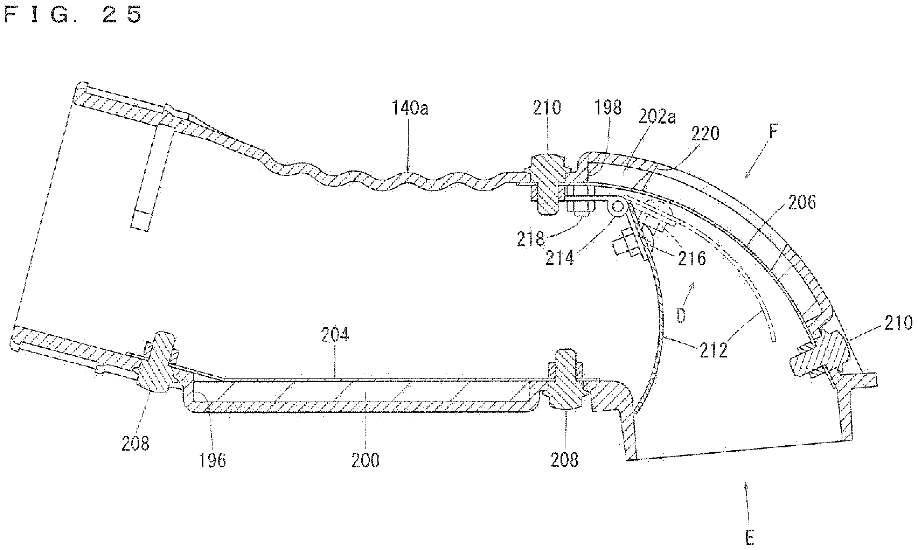

Also, the exhaust duct 140 may be replaced with an exhaust duct 140a shown in Fig. 25, with an open/close member 212 provided inside the exhaust duct 140a. The exhaust duct 140a is identical with the exhaust duct 140 except that it has a cooling hole 220 (which will be described later). The open/close member 212 is configured in such a way that it can be opened when the golf car 10 is moving and it can be closed when the golf car 10 stops. In the present embodiment, the open/close member 212 is configured in such a fashion that it is opened by exhaust gas which passes through the exhaust duct 140a, and it is closed by gravity (own weight) of the open/close member 212. An amount of opening (an extent of opening) of the open/close member 212 is set in accordance with exhaust gas pressure received by the open/close member 212. Fig. 25 shows a closed state of the open/close member 212 indicated in a solid line and a fully opened state of the open/close member 212 indicated in an alternate long and short dash line. As the exhaust gas pressure (amount of exhaust gas) increases, the degree of opening of the open/close member 212 increases.

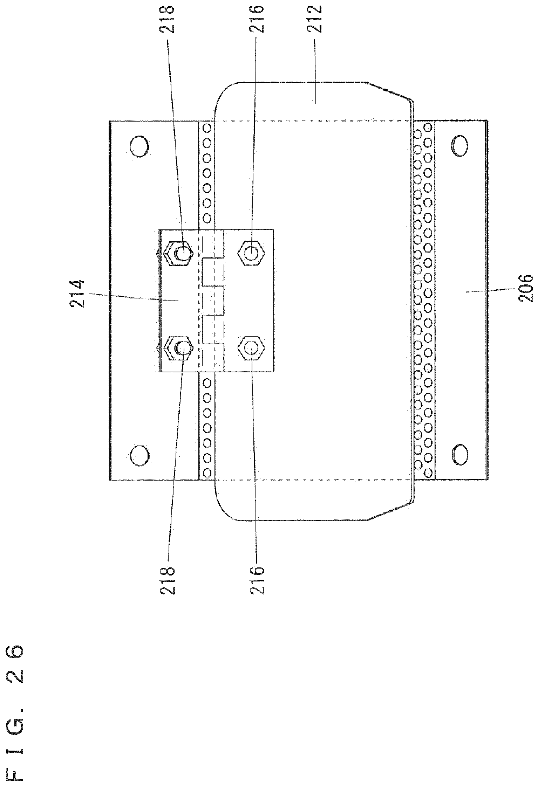

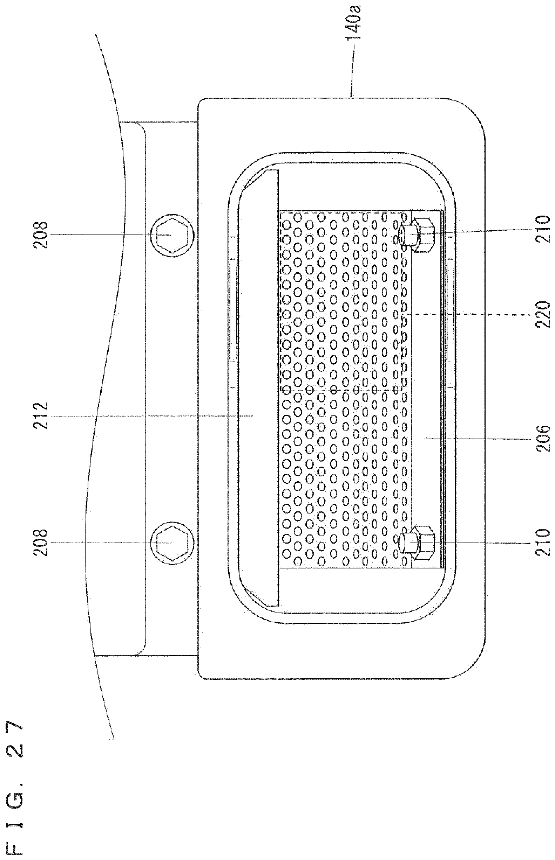

Referring to Fig. 25 through Fig. 27, the open/close member 212 is provided by, for example, a stainless steel exhaust gas flap of a slightly curved plate. The open/close member 212, is joined, at a widthwise intermediate region of its end portion (upper end portion), to a widthwise intermediate region of an end portion (upper end portion) of the holding member 206 via a hinge 214 made of stainless steel for example. The open/close member 212 and the hinge 214 are connected to each other with a fastener 216, whereas the holding member 206 and the hinge 214 are connected to each other with a fastener 218. The open/close member 212 is made wider than the holding member 206. The open/close member 212 is openable/closable (pivotable) around the hinge 214. The open/close member 212 is provided near the opening 92a where the rearward end portion of the exhaust duct 140a is located.

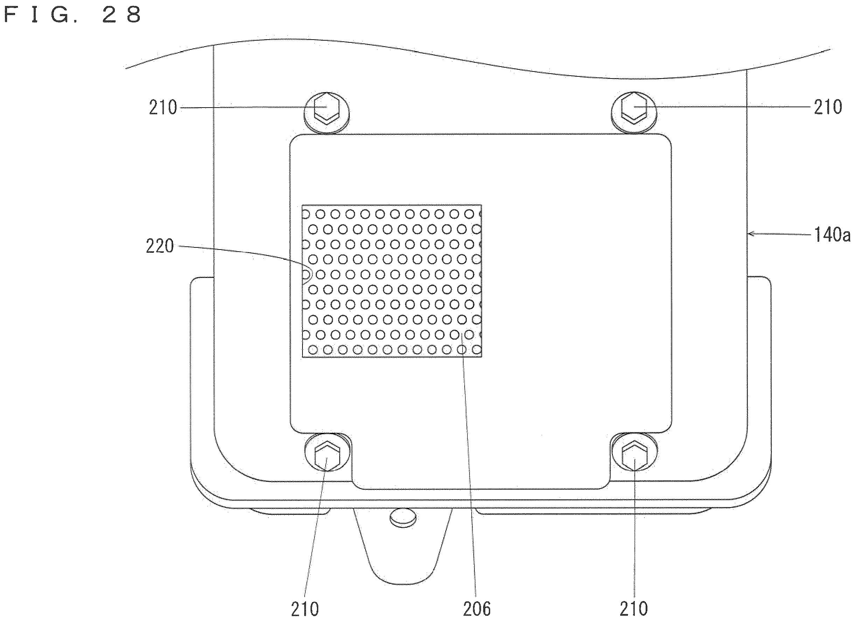

Referring also to Fig. 28, in the exhaust duct 140a, a cooling hole 220 penetrates an inner circumferential surface and an outer circumferential surface (an upper surface corresponding to the recess 198 in the present embodiment) of the exhaust duct 140a on a more downstream side than but near the open/close member 212 in its closed state. The cooling hole 220 is formed above the opening 92a where the rearward end portion of the exhaust duct 140a is located. A sound absorbing member 202a, in which portions corresponding to the cooling hole 220 is removed, is fitted into the recess 198 of the exhaust duct 140a. Therefore, the holding member 206 is exposed to the outside in the cooling hole 220.

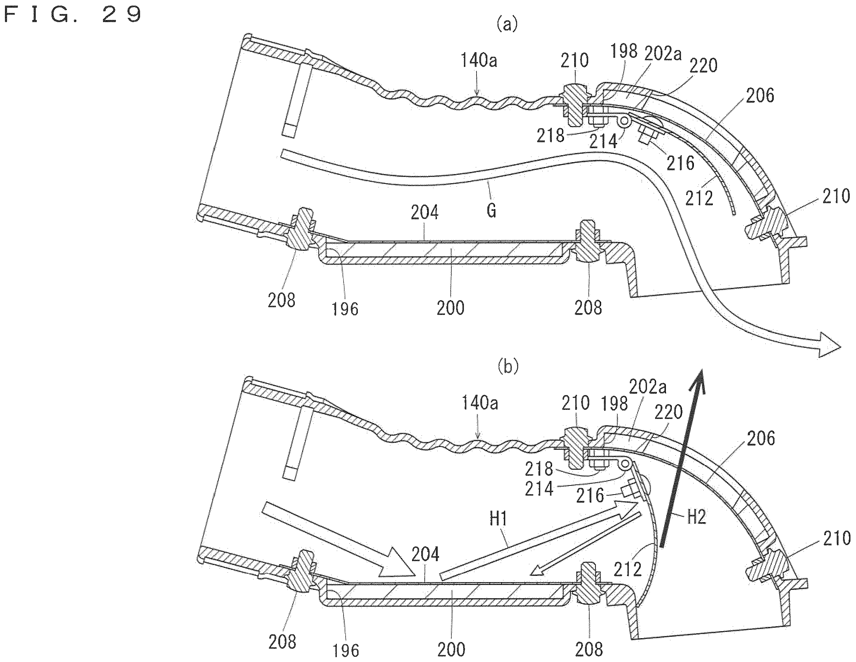

According to this embodiment, when the golf car 10 is moving, the open/close member 212 opens, thereby enabling exhaust gas from the muffler 128 to discharge smoothly to the outside from below the engine room S via the exhaust duct 140a and the opening 92a of the undercover 90, as indicated in Fig. 29(a) with a white arrow G. On the other hand, when the golf car 10 is stopped, the open/close member 212 closes, whereby it is possible to further attenuate noises such as noise from the muffler 128 and vibration noise of the engine 114 which propagates through the muffler cover 138, in the exhaust duct 140a, as indicated in Fig. 29(b) with a white arrow H1, and therefore to further reduce noise leakage out of the vehicle. It should be noted here that the thicknesses of the white arrow H1 indicate sound pressures.

Since the open/close member 212 is configured to be opened by the exhaust gas which passes through the exhaust duct 140a, there is no need for providing any separate parts for opening the open/close member 212, yet it is possible to open the open/close member 212.

When the engine 114 is running at a slow speed (e.g., not greater than 2500 rpm), exhaust gas pressure (amount of exhaust gas) is small and the open/close member 212 is half open, so it is possible to achieve both discharging of the exhaust gas and reducing noise leakage to the outside of the vehicle. The arrangement is particularly effective when the golf car 10 is traveling at a constant speed.

When the golf car 10 is stopped and the open/close member 212 is closed, heat at the open/close member 212 is released through the cooling hole 220 to the outside (above, in the present embodiment) the exhaust duct 140a as indicated in Fig. 29 (b) with an arrow H2, whereby the arrangement is capable of cooling the open/close member 212 and therefore reducing deterioration of the open/close member 212 due to heat.

It should be noted here that although the open/close member 212 is configured to be closed by its own weight in the embodiment shown in Fig. 25, the invention is not limited to this. The open/close member 212 may be configured to be closed by an elastic member such as a spring.

In the embodiment described thus far, description was made for a case where the present invention is applied to a golf car. However, the present invention is not limited to this. The present invention is applicable to any other vehicles.

The present invention being thus far described in terms of preferred embodiments, it is obvious that these may be varied in many ways within the scope of the present invention. The scope of the present invention is only limited by the accompanied claims.

### REFERENCE SIGNS LIST

10 Golf car
90 Undercover
92 Front cover portion
92a, 98 Openings
114 Engine
118 Cylinder body
128 Muffler
132 Shroud
138 Muffler cover
140, 140a Exhaust ducts
184 Silencer
200, 202, 202a Sound absorbing members
204, 206 Holding members
212 Open/close member
220 Cooling hole
S Engine room

## Claims

1. A vehicle (10) comprising:
an engine (114) including a cylinder body (118);
a muffler (128) to which exhaust gas from the engine (114) is supplied;
a shroud (132) covering the cylinder body (118);
a muffler cover (138) covering the muffler (128) and communicating with the shroud (132);
an undercover (90) provided at a lower position than the engine (114) and having an opening (92a);
an exhaust duct (140) connected to an exit end portion of the muffler cover (138); and
an engine room (S) having an underside defined by the undercover (90), the engine room (S) housing the engine (114), the muffler (128), the shroud (132), the muffler cover (138) and the exhaust duct (140), wherein
the opening (92a) is located at a more rearward position than the muffler (128) in a side view, and
the exhaust duct (140) is routed above the undercover (90) and the exhaust duct (140) has its rearward end portion positioned at the opening (92a) in order to discharge the exhaust gas from below the engine room (S) to the outside;
**characterized in that** the vehicle (10) further comprises a fan (136) provided inside a fan case (134) connected to the shroud (132), for supplying external air into the shroud (132); wherein an air-flowable gap is formed between the muffler (128) and the muffler cover (138), so that the external air which is introduced into the shroud (132) by the fan (136) flows between the shroud (132) and the cylinder body (118), and between the muffler cover (138) and the muffler (128).

2. The vehicle (10) according to Claim 1, wherein the exhaust duct (140) is elastic.

3. The vehicle (10) according to Claim 1 or 2, wherein the exhaust duct (140) is fitted to the opening (92a).

4. The vehicle (10) according to one of Claims 1 through 3, further comprising a silencer (184) provided at an outlet of the muffler (128).

5. The vehicle (10) according to one of Claims 1 through 4, further comprising a sound absorbing member (200, 202) provided on an inner circumferential surface of the exhaust duct (140) .

6. The vehicle (10) according to Claim 5, further comprising a discharge pipe (180) provided at an outlet of the muffler (128),
wherein the sound absorbing member (200, 202) is in the exhaust duct (140), on an extended line of a center axis (P) of the discharge pipe (180).

7. The vehicle (10) according to Claim 5 or 6, further comprising a holding member (204, 206) configured to hold the sound absorbing member (200, 202) on the inner circumferential surface of the exhaust duct (140), wherein the holding member (204, 206) is provided by a perforated plate.

## Patentansprüche

1. Ein Fahrzeug (10), das folgende Merkmale aufweist:
einen Motor (114) mit einem Zylinderkörper (118);
einen Schalldämpfer (128), dem Abgas aus dem Motor (114) zugeführt wird;
eine Hülle (132), die den Zylinderkörper (118) bedeckt;
eine Schalldämpferabdeckung (138), die den Schalldämpfer (128) bedeckt und mit der Hülle (132) in Verbindung steht;
eine Unterabdeckung (90), die an einer niedrigeren Position vorgesehen ist als der Motor (114) und eine Öffnung (92a) aufweist;
einen Ausstoßkanal (140), der mit einem Ausgangsendabschnitt der Schalldämpferabdeckung (138) verbunden ist; und
einen Motorraum (S) mit einer Unterseite, die definiert ist durch die Unterabdeckung (90), wobei der Motorraum (S) den Motor (114), den Schalldämpfer (128), die Hülle (132), die Schalldämpferabdeckung (138) und den Ausstoßkanal (140) unterbringt, wobei
die Öffnung (92a) in einer Seitenansicht an einer Position weiter hinten als der Schalldämpfer (128) positioniert ist und
der Ausstoßkanal (140) oberhalb der Unterabdeckung (90) geführt ist und der hintere Endabschnitt des Ausstoßkanals (140) an der Öffnung (92a) positioniert ist, um das Abgas von unterhalb des Motorraums (S) nach außen abzugeben;
**dadurch gekennzeichnet, dass**
das Fahrzeug (10) ferner einen Lüfter (136), der innerhalb eines Lüftergehäuses (134) vorgesehen ist, das mit der Hülle (132) verbunden ist, zum Zuführen von Außenluft in die Hülle (132) aufweist;
wobei ein luftdurchströmbarer Spalt zwischen dem Schalldämpfer (128) und der Schalldämpferabdeckung (138) gebildet ist, so dass die Außenluft, die durch den Lüfter (136) in die Hülle (132) eingeführt wird, zwischen der Hülle (132) und dem Zylinderkörper (118) strömt, sowie zwischen der Schalldämpferabdeckung (138) und dem Schalldämpfer (128).

2. Das Fahrzeug (10) gemäß Anspruch 1, bei dem der Ausstoßkanal (140) elastisch ist.

3. Das Fahrzeug (10) gemäß Anspruch 1 oder 2, bei dem der Ausstoßkanal (140) an die Öffnung (92a) gepasst ist.

4. Das Fahrzeug (10) gemäß einem der Ansprüche 1 bis 3, das ferner einen Geräuschdämpfer (184) aufweist, der an einem Auslass des Schalldämpfers (128) vorgesehen ist.

5. Das Fahrzeug (10) gemäß einem der Ansprüche 1 bis 4, das ferner ein Schallabsorbierbauteil (20, 202) aufweist, das an einer Innenumfangsoberfläche des Ausstoßkanals (140) vorgesehen ist.

6. Das Fahrzeug (10) gemäß Anspruch 5, das ferner ein Austrittsrohr (180) aufweist, das an einem Auslass des Schalldämpfers (128) vorgesehen ist,
wobei das Schallabsorbierbauteil (200, 202) in dem Ausstoßkanal (140), auf einer verlängerten Linie der Mittelachse (P) des Austrittsrohrs (180) liegt.

7. Das Fahrzeug (10) gemäß Anspruch 5 oder 6, das ferner ein Haltebauteil (204, 206) aufweist, das dazu ausgebildet ist, das Schallabsorbierbauteil (200, 202) an der Innenumfangsoberfläche des Ausstoßkanals (140) zu halten, wobei das Haltebauteil (204, 206) durch eine perforierte Platte vorgesehen ist.

## Revendications

1. Véhicule (10) comprenant:
un moteur (114) comportant un corps de cylindre (118);
un silencieux (128) vers lequel est alimenté le gaz d'échappement du moteur (114);
un hauban (132) recouvrant le corps de cylindre (118);
un couvercle de silencieux (138) recouvrant le silencieux (128) et communiquant avec le hauban (132);
un couvercle inférieur (90) prévu à une position plus basse que le moteur (114) et présentant une ouverture (92a);
un conduit d'échappement (140) connecté à une partie d'extrémité de sortie du couvercle de silencieux (138); et
une chambre de moteur (S) présentant une face inférieure définie par le couvercle inférieur (90), la chambre de moteur (S) logeant le moteur (114), le silencieux (128), le hauban (132), le couvercle de silencieux (138) et le conduit d'échappement (140), dans lequel
l'ouverture (92a) est située à une position plus en arrière que le silencieux (128), en vue de côté, et
le conduit d'échappement (140) est acheminé au-dessus du couvercle inférieur (90) et le conduit d'échappement (140) présente sa partie d'extrémité arrière positionnée au niveau de l'ouverture (92a) pour évacuer le gaz d'échappement d'au-dessous de la chambre de moteur (S) vers l'extérieur;
**caractérisé par le fait que**
le véhicule (10) comprend par ailleurs un ventilateur (136) prévu à l'intérieur d'un boîtier de ventilateur (134) connecté au hauban (132), pour alimenter de l'air extérieur vers le hauban (132);
dans lequel un interstice où peut circuler l'air est formé entre le silencieux (128) et le couvercle de silencieux (138), de sorte que l'air extérieur qui est introduit dans le hauban (132) par le ventilateur (136) s'écoule entre le hauban (132) et le corps de cylindre (118), et entre le couvercle de silencieux (138) et le silencieux (128).

2. Véhicule (10) selon la revendication 1, dans lequel le conduit d'échappement (140) est élastique.

3. Véhicule (10) selon la revendication 1 ou 2, dans lequel le conduit d'échappement (140) est monté sur l'ouverture (92a).

4. Véhicule (10) selon l'une des revendications 1 à 3, comprenant par ailleurs un silencieux (184) prévu à une sortie du silencieux (128).

5. Véhicule (10) selon l'une des revendications 1 à 4, comprenant par ailleurs un élément d'absorption acoustique (200, 202) prévu sur une surface circonférentielle intérieure du conduit d'échappement (140).

6. Véhicule (10) selon la revendication 5, comprenant par ailleurs un tuyau d'évacuation (180) prévu à une sortie du silencieux (128),
dans lequel l'élément d'absorption acoustique (200, 202) se situe dans le conduit d'échappement (140), sur une ligne prolongée d'un axe central (P) du tuyau d'évacuation (180).

7. Véhicule (10) selon la revendication 5 ou 6, comprenant par ailleurs un élément de maintien (204, 206) configuré pour maintenir l'élément d'absorption acoustique (200, 202) sur la surface circonférentielle intérieure du conduit d'échappement (140), dans lequel l'élément de maintien (204, 206) est constitué par une plaque perforée.
